# EUROPEAN PATENT APPLICATION

(11) **EP 4 815 481 A1**
(43) Date of publication of application: **30.09.2026**
(21) Application number: 26164283.9
(22) Date of filing: 12.03.2026
(51) Int. Cl.: H04N 23/62, H04N 23/63, G06F 3/04847

(54) **CONTROL APPARATUS, CONTROL METHOD, AND PROGRAM**

(30) Priority: 26.03.2025 JP 2025052442; 26.11.2025 JP 2025203964
(71) Applicant: Canon Kabushiki Kaisha, Tokyo 146-8501 (JP)
(72) Inventor: YAMAMOTO, Yuki, Tokyo, 146-8501 (JP)
(74) Representative: Canon Europe Limited

(57) **Abstract**

There is provided a control apparatus. An instruction regarding an image capture condition is given to an image capture apparatus. An operation screen including at least one button for each image capture condition is displayed. An operation having a first characteristic or an operation having a second characteristic different from the first characteristic performed on the button is obtained. In a case where the operation performed on one button has the first characteristic, the image capture apparatus is caused to execute image capture using an image capture condition associated with the one button. In a case where the operation performed on the one button has the second characteristic, processing to associate an image capture condition of the image capture apparatus with the one button is executed.

## Description

### TECHNICAL FIELD

The present disclosure relates to a control apparatus, a control method, and a program.

### BACKGROUND

Network cameras wherein an image capture apparatus can be remotely controlled have become common in recent years. With this technology, a user can operate a control apparatus for control or the like and, via a network, can remotely manage various functions that are required to use a camera, such as control (e.g., zoom and focus), image quality settings, power source control, state management, network settings, and the like.

Such a network camera may be provided with a preset function that can pre-register states such as field of view settings related to the pan, tilt, and zoom of the camera. The user can change the field of view without a manual pan/tilt/zoom (PTZ) operation by executing a preset registered in the camera.

With the technology described in Japanese Patent Laid-Open No. 2006-101118, a preset is registered using a known method, and, at the same time, a still image (hereinafter referred to as a thumbnail image) of the image at the time of registration of a preset position is generated. The generated thumbnail image is associated with the registered preset and displayed on a display apparatus. Using this method, a preset can be executed while the user checks the thumbnail image, and the preset field of view can easily be visually comprehended.

### SUMMARY

However, with the technology described in Japanese Patent Laid-Open No. 2006-101118, there is no mention of switching between execution and registration, and a different button needs to be operated for the preset execution and registration. Thus, the process of registering a preset becomes complicated. Also, in a case where a certain number of presets or more are to be displayed, a preset list screen needs to be displayed distinct from an operation screen for the presets and the like, but on the list screen, a preset cannot be registered. Thus, in a case where the user registers a preset using a button, the user needs to check the information of the preset they wish to register on the preset list screen and switch from the display screen to a registration mode to register. In this manner, the preset registration operation becomes complicated, and there is a negative effect on the ease-of-use for the user.

**An** embodiment of the present disclosure provides an information processing apparatus that enables operation of the same button for execution of a preset control and registration of a preset setting.

The present disclosure in its first aspect provides a control apparatus as specified in claim 1. Optional features are specified in claim 2 to 13.

The present disclosure in its second aspect provides a control method as specified in claim 14.

The present disclosure in its third aspect provides a program as specified in claims 15.

The image capture condition corresponds to a field of view of the camera, which may be defined by pan, tilt and zoom settings of the camera that are included in the instruction output by the control means. If the control apparatus is configured to control a plurality of cameras, the instruction output by the control means may also include camera identification information.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
FIG. 1 is a diagram illustrating an example of a system configuration including a control apparatus.
FIG. 2 is a block diagram illustrating an example of a configuration of a control apparatus and an image capture apparatus.
FIG. 3 is a flowchart illustrating an example of processing by a control apparatus according to a first embodiment.
FIG. 4 is a diagram for describing a display GUI of a button according to the first embodiment.
FIG. 5 is a diagram for describing preset information associated with a button.
FIG. 6 is a diagram illustrating an example of a display of a button GUI.
FIG. 7 is a diagram for describing a touch position on a display unit.
FIG. 8 is a diagram for describing a button GUI and a touch position on a display unit.
FIG. 9 is a flowchart illustrating an example of processing by a control apparatus according to a second embodiment.
FIG. 10 is a diagram for describing a GUI screen for whether or not to register a thumbnail image.
FIG. 11 is a flowchart illustrating an example of processing by a control apparatus according to a third embodiment.
FIG. 12 is a diagram for describing a confirmation notification according to a third embodiment.
FIG. 13 is a flowchart illustrating an example of processing by a control apparatus according to a fourth embodiment.
FIG. 14 is a diagram for describing a display of a button GUI according to the fourth embodiment.
**FIG.** 15 is a diagram for describing a user touch input position on a display unit.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### First Embodiment

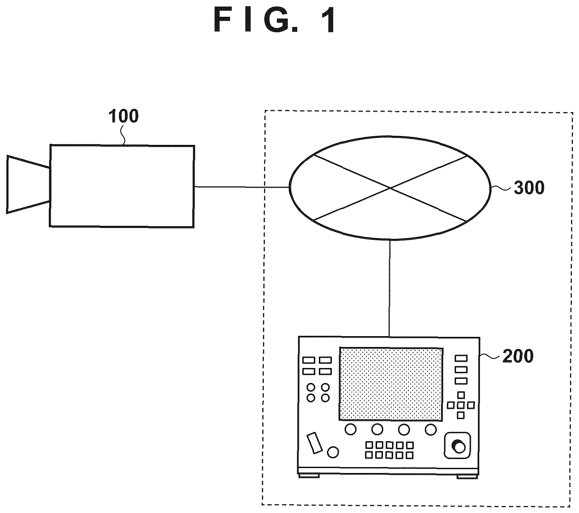

**FIG.** 1 is a diagram illustrating an example of the configuration of a system provided with a control apparatus 200 according to the present embodiment. The system illustrated in FIG. 1 includes a camera (image capture apparatus) 100 and the control apparatus 200. The control apparatus 200 may be referred to as a camera controller and controls the operations of the camera 100. The camera 100 and the control apparatus 200 according to the present embodiment are connected in a state allowing for communication with one another via a network 300.

The control apparatus 200 can execute control processing of the operations of the camera 100 and information obtaining processing by transmitting commands based on a communication protocol for camera control to the camera 100. Note that FIG. 1 illustrates an example in which the control apparatus 200 controls a single camera 100, but the number of the cameras 100 controlled is not limited thereto. For example, the control apparatus 200 may control a plurality of the cameras 100, and in this case, each of the cameras 100 may have the same configuration or may be of different configurations for each camera 100. Also, in the present embodiment, the control apparatus 200 is a solitary apparatus and the camera 100 is a separate apparatus. However, as long as similar processing can be executed, the configuration is not limited to such a configuration. For example, the functions of the control apparatus 200 may be distributed among a plurality of apparatuses, and a portion of or all of the processing described as being executed by the control apparatus 200 may be executed by the camera 100.

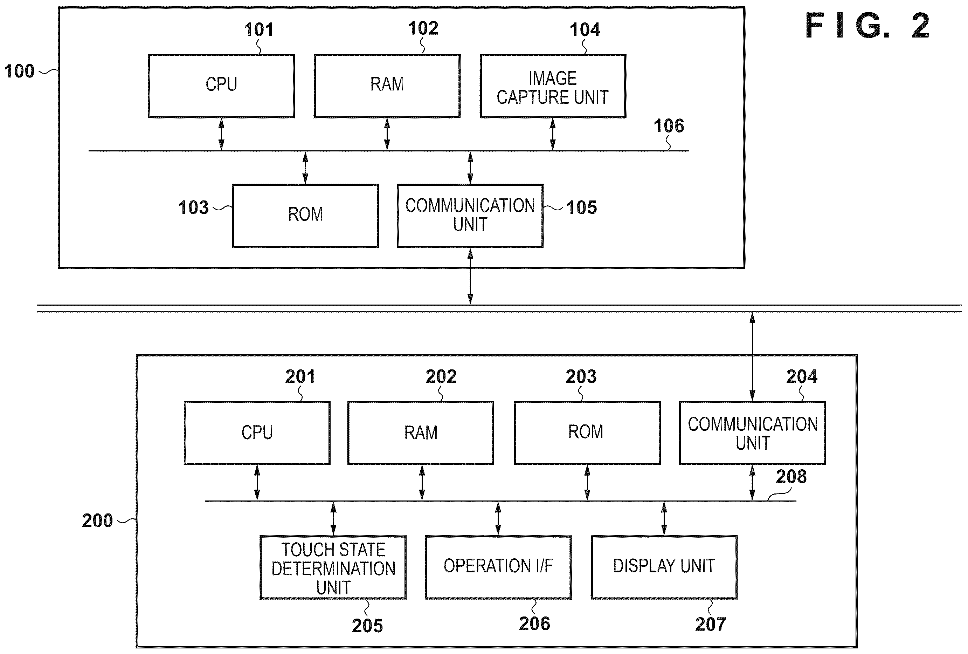

FIG. 2 is a block diagram illustrating an example of a main hardware configuration and functional configuration of the camera 100 and the control apparatus 200 according to the present embodiment.

### Configuration of Camera 100

The camera 100 according to the present embodiment includes a CPU 101, a RAM 102, a ROM 103, an image capture unit 104, and a communication unit 105. Also, each functional unit of the camera 100 is connected via an internal bus 106. Note that each functional unit is electrically driven by power that may be obtained by rectifying AC power supplied from outside to a predetermined voltage or power supplied from a built-in battery (not illustrated).

The CPU 101 is a system control unit that controls the entire system of the camera 100. The CPU 101 executes control and computational processing of each block by loading a control program registered in the ROM 103 into the RAM 102 and executing the control program.

The RAM 102, as a working memory, temporarily stores control programs and data.

**The** ROM 103 is constituted of a non-volatile storage apparatus represented by a flash memory, hard disk drive (HDD), solid state drive (SSD), SD card, and the like. The ROM 103 is used as a persistent storage area for an operating system (OS), various types of programs, and various types of data as well as a short-term storage area for various types of data.

The image capture unit 104 receives light focused via a lens at an image sensor, converts the received light into a charge, and obtains a moving image. As the image sensor, for example, a complementary metal oxide semiconductor (CMOS) image sensor can be used. Also, as the image sensor, a charge coupled device (CCD) image sensor may be used.

The communication unit 105 is configured to perform network communication with external devices. The communication unit 105 according to the present embodiment performs communication with the control apparatus 200.

### Configuration of Control Apparatus 200

The control apparatus 200 according to the present embodiment includes a CPU 201, a RAM 202, a ROM 203, a communication unit 204, a touch state determination unit 205, an operation I/F 206, and a display unit 207. Each functional unit of the control apparatus 200 is connected via an internal bus 208.

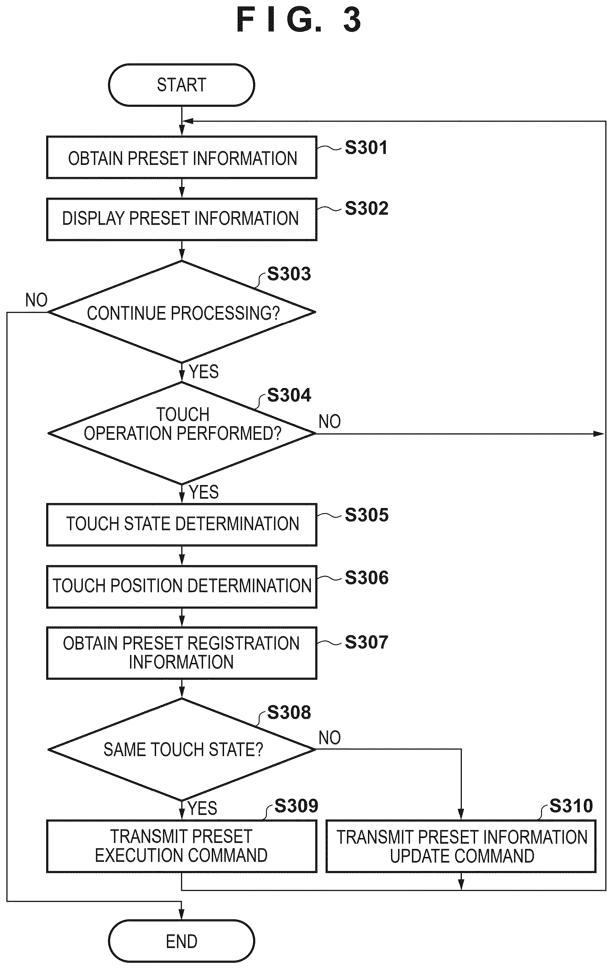

The CPU 201 is a system control unit that controls the entire system of the control apparatus 200. The CPU 201, by loading a program registered in the ROM 203 into the RAM 202 and executing the program, executes control and computational processing of each block and executes processing of the flowchart illustrated in FIG. 3 described below.

Also, when the CPU 201 displays a menu screen on the display unit 207 and receives an operation in accordance with the menu screen via the operation I/F 206, the CPU 201 executes setting processing of the control apparatus 200 itself or performs control of the connected camera 100.

The RAM 202, as a working memory, temporarily stores control programs and data.

The ROM 203 is constituted of a non-volatile storage apparatus represented by a flash memory, HDD, SSD, SD card, and the like. The ROM 203 is used as a persistent storage area for an OS, various types of programs, and various types of data as well as a short-term storage area for various types of data.

The communication unit 204 is configured to perform network communication with external devices. The communication unit 204 according to the present embodiment performs communication with the camera 100.

The touch state determination unit 205 determines the characteristics (touch state) of a user input in a case where the user input is input to the GUI displayed on the display unit 207 via the operation I/F 206.

The operation I/F 206 is an interface (I/F) for receiving user input for the control apparatus 200. The operation I/F 206 includes an operation member such as a plurality of buttons or a joystick installed on the casing of the control apparatus 200 or a panel member for operating the GUI displayed on the display unit 207. When a user input is received via the operation member or the GUI, operation information indicating the input content is input to the CPU 201. Accordingly, preset setting for the control apparatus 200 or preset control for the camera 100 connected to the control apparatus 200 can be executed. This will be described later in detail.

The display unit 207 is constituted of a liquid crystal touch panel and a backlight, for example, and displays a GUI for performing settings for the camera 100 or the control apparatus 200 or a captured image obtained from a camera. The display unit 207 according to the present embodiment displays a captured image captured by the camera 100 and settings for the camera 100. Note that in the present embodiment described herein, the control apparatus 200 includes the display unit 207 and displays various types of information. However, as long as similar processing can be executed, the configuration is not particularly limited thereto. For example, a display apparatus with the function of the display unit 207 and the control apparatus 200 may be configured as separate casings.

### Operation of Present Disclosure

The control apparatus 200 according to the present embodiment instructs the camera 100 of an image capture condition. The image capture condition corresponds to a field of view of the camera 100, which may be defined by pan, tilt and zoom settings of the camera 100 that are included in the instruction output by the control apparatus. Also, the control apparatus 200 displays an operation screen including at least one button corresponding to each image capture condition and obtains a first characteristic operation (user input) or a second characteristic operation different from the first characteristic on the button. Here, in a case where the obtained operation is a first characteristic input, the control apparatus 200 causes the camera 100 to execute image capture using the image capture condition associated with the button described above. In a case where the obtained operation is a second characteristic input, the control apparatus 200 associates (registers) the image capture condition for the camera 100 with the button described above. In particular, the current image capture condition for the camera 100 is associated with the button. Hereinafter, associating an image capture condition (or a thumbnail image which will be described later in detail) with a button may be referred to as "registering" an image capture condition with a button. If the control apparatus is configured to control a plurality of cameras, the instruction output by the control apparatus 200 may also include camera identification information.

Here, the control apparatus 200 obtains a touch input as a user operation on the button and determines whether the obtained user input is the first characteristic input or the second characteristic input. In the following description, in this manner, an input operation by the user is a touch input. This processing executed by the control apparatus 200 will be described in detail below with reference to the flowchart of FIG. 3.

FIG. 3 is a flowchart illustrating an example of processing executed by the control apparatus 200 according to the present embodiment. The processing illustrated in FIG. 3 is implemented by the CPU 201 reading out a program stored in the ROM 203 and loading the program into the RAM 202 and executing the control and computational processing of each unit. Also, the flowchart of FIG. 3 is executed based on information (operation information) indicating the content of the user input obtained by the CPU 201 via the operation I/F 206. Also, the processing illustrated in FIG. 3 is an example, and the order of the processing is not limited.

**In** S301, the CPU 201 receives (obtains) an image capture condition (hereinafter, referred to as preset information) stored in the camera 100 from the camera 100 via the communication unit 204 and stores it in the RAM 202. Here, the CPU 201 functions as an image capture condition obtaining unit that obtains an image capture condition from an image capture apparatus. In the present embodiment, as the preset information obtained from the image capture apparatus, a field of view (hereinafter, preset field of view), an identification sign (hereinafter, preset number), an identification name (hereinafter, preset name), and a thumbnail image may be used. However, the preset information is not particularly limited to these. For example, as the preset information, the PTZ movement speed when moving to the preset field of view or the like may be obtained. Note that the identification sign is not limited to being a number, and characters with a set sort order such as characters of the alphabet may be used.

In S302, the CPU 201 reads out the preset information stored in the RAM 202 and the GUI button information stored in the RAM 202 in advance from the RAM 202. Next, the CPU 201, based on the preset number read out from the RAM 202, associates the preset information with the GUI button and stores this in the RAM 202 as well as displaying a GUI based on this information on the display unit 207. Here, the CPU 201 functions as a button display unit that displays a button with an allocated image capture condition obtained via the image capture condition obtaining unit. Note that in the present embodiment, the GUI button information read out from the RAM 202 indicates the center coordinates and the vertical and horizontal length of each GUI button on the display unit 207. However, the GUI button information is not limited thereto. For example, as the GUI button information, information that can determine the position and area of the GUI button on the display unit 207, such as the four corner coordinates of each GUI button on the display unit 207 or the upper left coordinates and the vertical and horizontal length of the GUI button, can be discretionarily used. Also, the GUI button information may not be stored in the RAM 202 in advance and may be obtained from the camera 100 or set by the user.

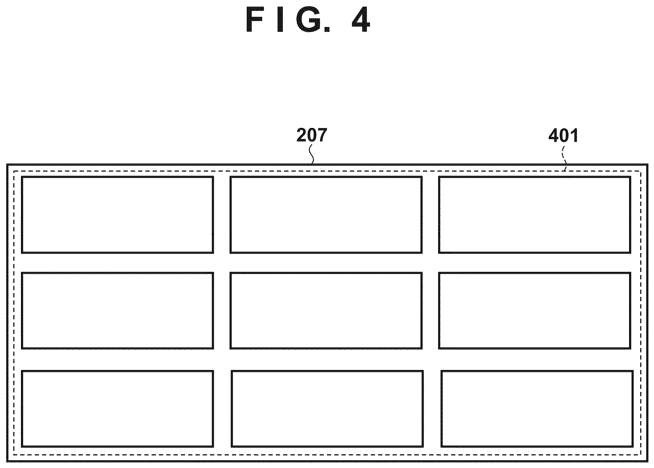

FIG. 4 illustrates an example of a GUI button arrangement when the GUI buttons are displayed as a list on the display unit 207 based on the GUI button information. In the example of FIG. 4, GUI buttons 401 are displayed in order of the preset number from the upper left of the display unit 207, and when they cannot all be displayed in a row, a line break is used. In the example illustrated in FIG. 4, a total of nine GUI buttons are displayed in three rows and three columns on one screen. However, the number of GUI buttons displayed on one screen is not limited thereto. Also, the number of GUI buttons displayed on one screen in this manner may be set in advance or may be settable by the user. Also, in a case where there are many preset numbers and all do not fit on one screen, a display of a scrollbar, a page switch button, or the like may be performed, and a certain number of the GUI buttons for display may be displayed at a time while switching between them.

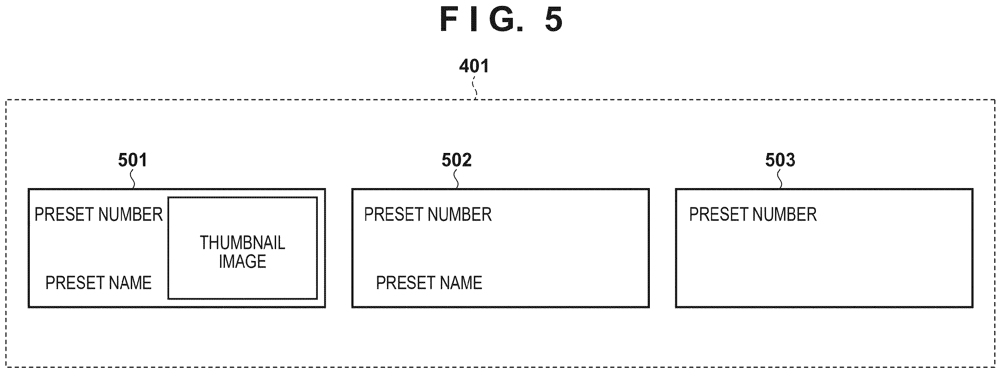

**FIG.** 5 illustrates an example of the display of preset information associated with the GUI button 401. In the example illustrated in FIG. 5, preset information such as that indicated by a display 501 is displayed superimposed on each of the GUI buttons according to the present embodiment, and for one GUI button, the preset number is displayed in the upper left, the preset name is displayed in the lower left, and the thumbnail image is displayed on the right side. However, the layout of the preset information displayed superimposed on the GUI button is not limited to this layout, and the arrangement of various types of information may be freely changed, such as the thumbnail image being displayed on the left side and the like. In this manner, the CPU 201 according to the present embodiment can associate the thumbnail image with a GUI button in addition to an image capture condition. Hereinafter, "preset information" is described as including an image capture condition and a thumbnail image unless otherwise mentioned.

As the thumbnail image according to the present embodiment, an image captured by the camera 100 at the timing when the processing of associating preset information with a GUI button is executed may be obtained and used. However, the image used as a thumbnail image is not particularly limited, and an image input or selected by the user may be used as the thumbnail image. The thumbnail image according to the present embodiment is displayed superimposed on a GUI button, and a display region of the thumbnail image on a GUI button may hereinafter be referred to as a "thumbnail region" or a "thumbnail image display region".

Also, in a case where a thumbnail image cannot be obtained, only the preset number and the preset name may be displayed as with a display 502. In the display 502, the thumbnail image is not displayed, indicating that a thumbnail image has not been obtained. However, the display aspect is not particularly limited thereto. For example, in a case where a thumbnail image has not been obtained, an image or phrase indicating that a thumbnail image cannot be obtained may be displayed at the display position of the thumbnail image. In a case where preset information cannot be obtained and preset information is not associated with a GUI button, only the preset number may be displayed superimposed on the GUI button as with a display 503.

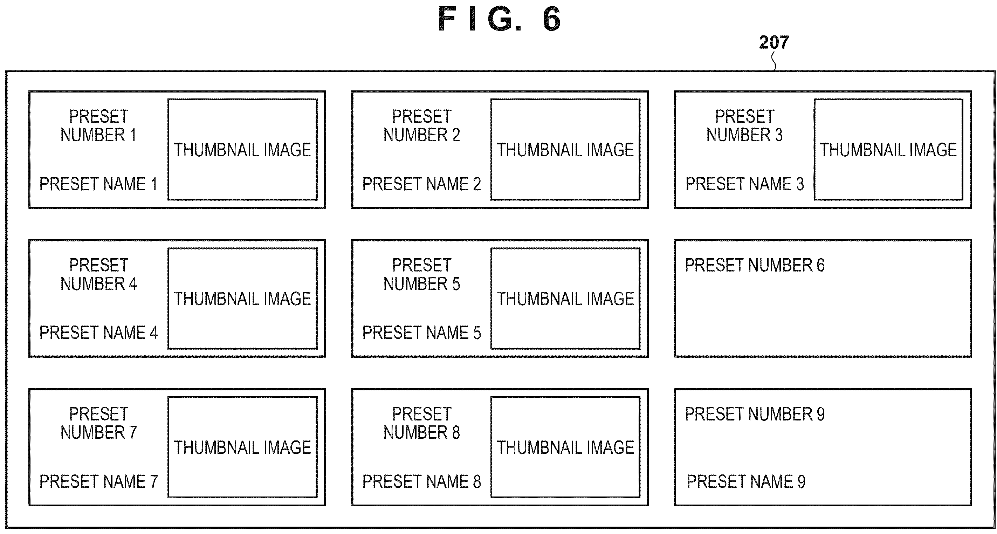

Note that the preset number displayed in the display 503 may not be obtained from the camera 100 and may be a number deduced from the preset number that could be obtained. For example, in the display format of FIG. 4, in a case where preset information with preset numbers of 1, 2, 3, 4, 5, 7, 8, and 9 is obtained from the camera 100, as a preset number of the 6th one which could not be obtained, the 6th GUI button is displayed in a format of the display 503. FIG. 6 is a diagram illustrating an example of the display of GUI buttons corresponding to preset numbers 1 to 9 obtained in this manner. In FIG. 6, preset information is not associated with the GUI button of the 6th preset number as described above, and for the GUI button of the 9th preset number, preset information is associated but a thumbnail image is not obtained.

In S303, the CPU 201 determines whether or not to continue the processing illustrated in FIG. 3. In the case of continuing the processing, the CPU 201 advances the processing to S304, otherwise the CPU 201 ends the processing of FIG. 3. Here, the CPU 201 determines whether or not to continue the processing by checking whether a command indicating to end the present processing has been received via the communication unit 204 or the operation I/F 206.

In S304, the CPU 201 determines whether or not a user input (touch operation) has been performed on a GUI button displayed on the display unit 207 via the operation I/F 206. In a case where a touch operation has been performed, the CPU 201 stores touch operation information such as the number of touches, the touch duration, and the like into the RAM 202 and advances the processing to S305. Otherwise, the CPU 201 returns the processing to S301. Note that in the present embodiment, in the touch operation determination, an electrical signal (contact signal) generated when a finger comes into contact with the display unit 207 is used, but whether a touch operation is performed may be determined using a different method. For example, whether or not there is a touch operation may be determined using a change in voltage on the display unit 207 or using a sensor such as an infrared sensor. Regarding the specific touch detection technology, conventional technology is used, and thus a description is omitted.

In S305, the CPU 201 reads out the touch operation information stored in S304 from the RAM 202 and passes it to the touch state determination unit 205. The touch state determination unit 205 determines whether the user input characteristic (input characteristic) is the first characteristic or the second characteristic based on the received touch operation information and stores the determination result in the RAM 202. Hereinafter, a determination of whether a user input is a first characteristic input or a second characteristic input performed by the touch state determination unit 205 may be referred to as a "touch state determination". Also, in the following touch state determination processing, based on the user input touch characteristic, if the user input characteristic is the first characteristic, it is referred to as being in the "first touch state", and if the user input characteristic is the second characteristic, it is referred to as being in the "second touch state".

The touch state determination unit 205 according to the present embodiment can determine whether the user input characteristic is the first characteristic or the second characteristic based on a touch characteristic (touch state) such as, for example, the touch input duration, frequency (number of times), number of fingers, or input strength as the input characteristic. In the present embodiment, as a state determined to be the first characteristic, a single tap (short press) where a touch input is interrupted within a predetermined threshold time from when a touch is detected is used, and as a state determined to be the second characteristic, a hold (long press) where a touch input continues for longer than the predetermined threshold time is used. Note that here, time information corresponding to the threshold for determining whether a touch input is a single tap or a hold is stored in the RAM 202 in advance, but the time information may be obtained from the camera 100 or may be able to be set by the user. However, as described above, touch characteristics according to the present embodiment are not limited to being differentiated based on such input duration. For example, in a case where the touch input, which is a user input, is a double tap (input where a second tap input is made within the predetermined threshold time after a touch input is interrupted) or a triple tap, the input characteristic may be the second characteristic, and the input characteristic if this is not the case may be the first characteristic. In this manner, as the touch characteristic, the touch input duration, frequency (number of times), number of fingers (one-finger gesture or two-finger gesture), input strength (whether or not the touch pressure is equal to or greater than a predetermined pressure), or the like can be used.

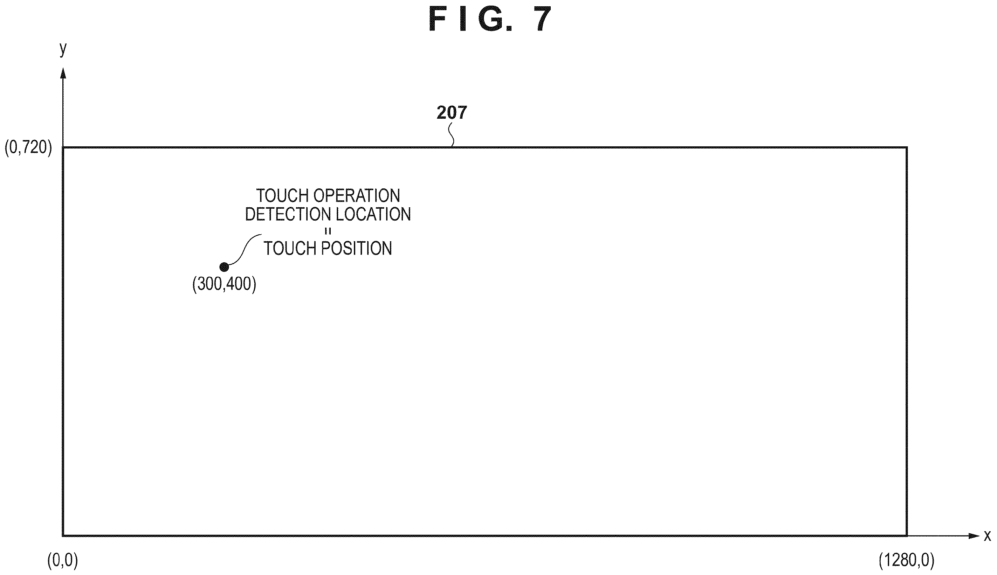

In S306, the CPU 201 reads out the touch operation information stored in S304 from the RAM 202, determines the position on the display unit 207 of the position (touch position) where the touch input was performed based on this information, and stores the determined touch position in the RAM 202. Note that in the present embodiment, the touch position on the display unit 207 is obtained using a similar method to the method of determining whether or not a touch operation has been performed in S304. Specifically, as illustrated in FIG. 7, in a coordinate system with the lower left of the display unit 207 as the origin, the coordinates where a touch operation is detected are determined as the touch position. Note that in the present embodiment, the touch position is represented as a single set of coordinates, but as long as the touch position can be set, the touch position is not particularly limited to this aspect. For example, in the case of a plurality of touch positions, these are associated together and set as the touch positions.

In S307, the CPU 201 reads out the GUI button information stored in S302 and the touch position stored in S306 from the RAM 202. Next, the CPU 201 determines which GUI button was touched based on the GUI button information and the touch position read out from the RAM 202 and reads out the preset information associated with that GUI button from the RAM 202. Then, the CPU 201 stores the read out preset information in the RAM 202 as information to be used in preset control.

"Preset control" according to the present embodiment refers to image capture control of an image capture apparatus using an image capture condition set in advance (associated with a GUI button) that is executed in a case where the touch characteristic of the user input to the GUI button is the first characteristic.

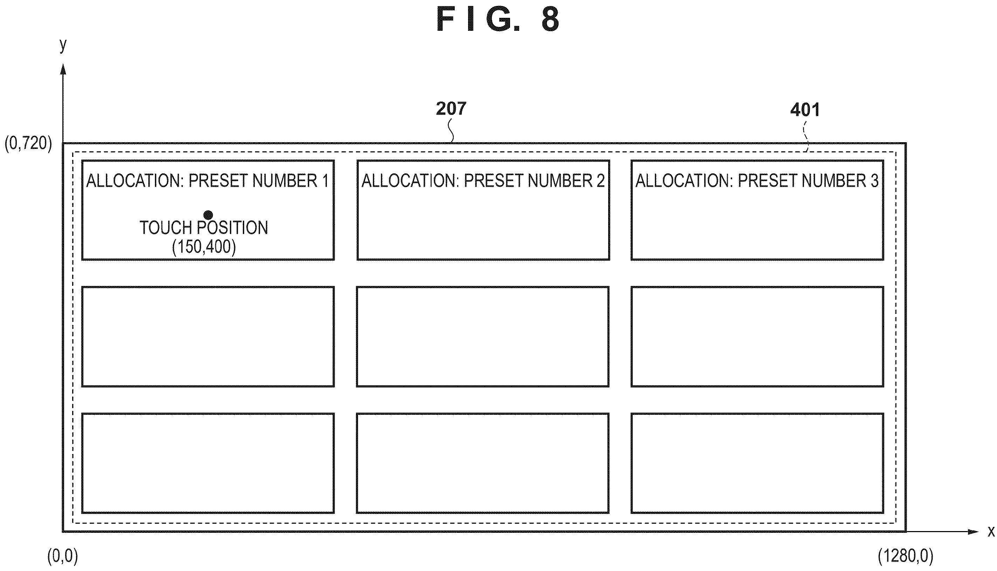

FIG. 8 is a diagram illustrating an example of GUI buttons and a touch position on the display unit 207. In the example of FIG. 8, a touch input has been made in the region on the GUI button displayed in the upper left of the display unit 207. In this case, the CPU 201 obtains the preset information of the preset number No. 1 allocated to the GUI button displayed in the upper left of the display unit 207 in response to the reception of this touch input.

In S308 to S309, the CPU 201 controls the image capture condition instruction to the camera 100 in accordance with the touch characteristic. In S308, the CPU 201 determines whether or not the touch characteristic stored in S305 is the first characteristic and advances the processing to S309 in a case where it is the first characteristic and advances the processing to S310 in a case where it is not. Here, information designating the first characteristic is stored in the RAM 202 in advance and whether or not the touch characteristic stored in S305 is the first characteristic is determined by determining whether or not the first touch characteristic matches the touch characteristic stored in S305.

Note that in the present embodiment, in a case where the touch characteristic is determined to be the first characteristic, the processing transitions to S309, and this is because the operation of S309 has a higher immediacy for the user compared to the operation of S310. Thus, in a case where the operation of S310 is wished to be performed more immediately, S310 may be transitioned to in a case where the touch characteristic is determined to be the first characteristic and S309 may be transitioned to if this is not the case. Also, the information designating the first characteristic does not need to be stored in the RAM 202 in advance and may be obtained from the camera 100 or may be settable by the user.

In S309, the CPU 201 reads out the preset information stored in S307 from the RAM 202. Next, the CPU 201 transmits a control command for executing the preset control stored under the preset number to the camera 100 via the communication unit 204 and returns the processing to S301.

In S310, the CPU 201 reads out the preset information stored in S307 from the RAM 202. Next, the CPU 201 transmits a command for associating (registering or updating) the preset information with the GUI button of the preset number to the camera 100 via the communication unit 204. In the example described here, as the preset information, the current image capture condition of the camera 100 is used and associated, but the image capture condition to be associated may be editable. In the present embodiment, as the command for registering the preset information, a control command for collectively registering a preset field of view, preset number, and preset name and a control command for registering only a thumbnail image are separately prepared and transmitted to the camera 100. However, for the command for registering the preset information, it is sufficient that the preset information is associated with a button, and no such limitation is intended. For example, the command for registering the preset information may be a control command for collectively registering all of the pieces of information included in the preset information or may be a control command for separately registering these.

According to such a configuration, in a case where the characteristic of the user input to a button received on an operation screen is the first characteristic, image capture using the image capture condition associated with the button can be executed, and in a case where the characteristic is the second characteristic, processing to associate an image capture condition with the button can be executed. In particular, a list of the preset information is displayed on the display unit 207 as illustrated in FIG. 6, and in accordance with the characteristic of the user input to the button where a user input was made on the list, both execution of preset control of the button and setting of the preset settings can be performed. Thus, the user can operate the same button to execute a preset control and register a preset setting. Also, the user can register and execute a preset by operating only a preset list screen. This makes it easier for the user to register a preset.

Note that in the example according to the present embodiment described above, the processing branches depending on whether the characteristic of a touch input is one of two types, the first characteristic and the second characteristic. However, in addition to such a determination, whether or not the characteristic of the touch input is a third characteristic may be performed and a different control command may be sent to the camera 100 in a case where the characteristic is determined to be the third characteristic. For example, in a case where the touch input is a single tap, it may be determined as the first characteristic, in the case of a hold, it may be determined as the second characteristic, and in the case of a double tap, it may be determined as the third characteristic. In this case, for example, if the touch input is determined to be a hold, control to register an image capture condition with a button can be performed, and if the touch input is determined to be a double tap, control to register a thumbnail in addition to an image capture condition with a button can be performed. Also, for example, in a case where the input operation is made with one finger, it may be determined to be the first characteristic, in a case where the input operation is made with two fingers, it may be determined to be the second characteristic, and in a case where the input operation is made with three fingers, it may be determined to be the third characteristic.

Also, in the embodiment described above, a GUI using a touch panel is displayed on the display unit 207. However, a UI using a click operation using a mouse or the like instead of a touch operation may be displayed. In this case, the touch state determination unit 205 performs determination relating to a click, hold, drag, or the like by a mouse input instead of a touch operation. In this case, the touch input is substituted with a mouse input, and the touch characteristic is substituted with an operation characteristic. As an example of such a substitution, for example, a single tap can be substituted with a single click, a double tap can be substituted with a double click, and similar operation substitutions can be performed. In the determination of the duration of a mouse input, for example, a short press and a long press may be differentiated based on the duration that a left click is pressed. Also, a left click may be determined as the first characteristic and a right click may be determined as the second characteristic.

### Second Embodiment

A control apparatus according to the second embodiment executes, in addition to the processing described as being executed in the first embodiment, a determination of whether or not to associate a thumbnail image with a button and executes processing based on this determination result. The camera 100 and the control apparatus 200 according to the present embodiment have a similar configuration to that of the first embodiment and can execute similar processing. Thus, redundant descriptions will be omitted.

In the example described below, a function of the control apparatus 200 according to the present embodiment determines whether to allow transmission of a control command for registering a thumbnail image based on a thumbnail image registration setting set for the control apparatus 200 at the time of preset information registration of the camera 100.

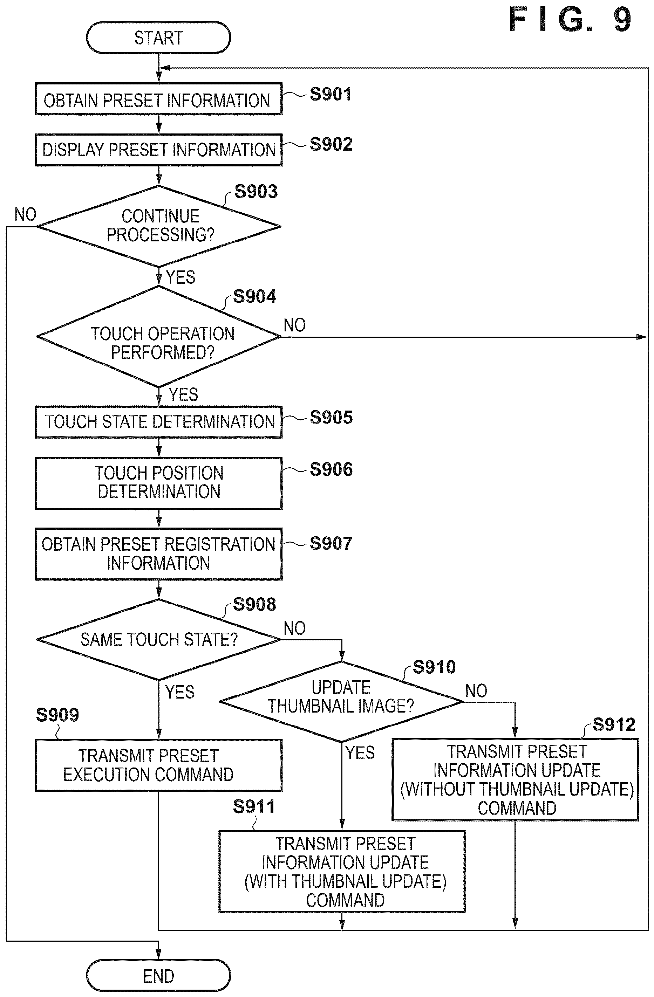

This processing executed by the control apparatus 200 will be described in detail below with reference to the flowchart of FIG. 9. The processing illustrated in FIG. 9 is implemented by the CPU 201 reading out a program stored in the ROM 203 and loading the program into the RAM 202 and executing the control and computational processing of each unit. Also, the flowchart of FIG. 9 is executed based on information (operation information) indicating the content of the user input obtained by the CPU 201 via the operation I/F 206. Also, the processing illustrated in FIG. 9 is an example, and the order of the processing is not limited.

In S901 to S909, processing similar to that of S301 to S309 of FIG. 3, respectively, is executed.

In S910, the CPU 201 determines whether or not to associate (register) a thumbnail image with a button. In a case where it is determined to perform association, the processing advances to S911. Otherwise, the processing advances to S912. Here, a setting for whether or not to register a thumbnail image is pre-set by a user input via the operation I/F 206 and stored in the RAM 202, and the determination of S910 is executed by the CPU 201 reading out this setting.

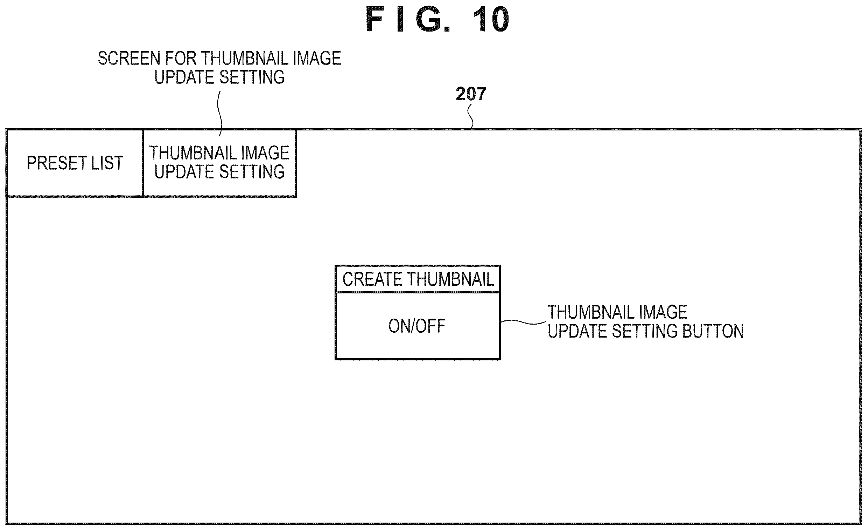

FIG. 10 illustrates an example of a GUI screen displayed by the CPU 201 on the display unit 207 for receiving a user input of whether or not to register a thumbnail image. In FIG. 10, a screen for changing the thumbnail image setting different from the GUI button list display screen displayed in S902 is displayed, and the thumbnail image registration settings can be switched by switching the thumbnail image registration setting button on and off. In the example of FIG. 10, if the setting is on, registration of a thumbnail image is set to be performed, and if the setting is off, registration of a thumbnail image is set to not be performed. Note that the method of changing the thumbnail image registration setting is not limited to this, and for example, the setting may be received from the camera 100, or a default value may be stored in the RAM 202 in advance and this setting may be read out from the RAM 202. Also, in the present embodiment, the allow thumbnail image registration setting is read out from the RAM 202 and used in the determination. However, what is read out in this manner is not limited to the allow thumbnail image registration setting. For example, instead of the allow thumbnail image registration setting, an allow preset field of view transmission setting, an allow preset name registration setting, or the like may be used.

In S911, processing similar to that of S310 of FIG. 3 is executed. In S912, the CPU 201 reads out the preset information stored in S907 from the RAM 202. Next, the CPU 201 transmits a control command for associating (registering or updating) information other than a thumbnail image, from among the preset information stored under the preset number, to the camera 100 via the communication unit 204 and then returns the processing to S901. Note that in a case where a setting other than the allow thumbnail image registration setting is used in S910, instead of a thumbnail image, preset information related to this setting can be used in S912. For example, in a case where an allow preset field of view transmission setting is used in S910, in S912, a control command for registering information other than a preset field of view is transmitted to the camera 100 in S912.

According to such processing, even in a case where the user does not wish to register a thumbnail image at the time of preset registration, registration can be performed with only one piece of any preset information.

### Third Embodiment

A control apparatus according to the third embodiment executes, in addition to the processing described as being executed in the first embodiment, a determination of whether or not to update an image capture condition at the time of associating an image capture condition with a button already associated with an image capture condition and executes processing based on this determination result. Here, the control apparatus 200 executes a confirmation notification for whether or not to update an image capture condition at the time of associating an image capture condition with a button already associated with an image capture condition. The camera 100 and the control apparatus 200 according to the present embodiment have a similar configuration to that of the first embodiment and can execute similar processing. Thus, redundant descriptions will be omitted.

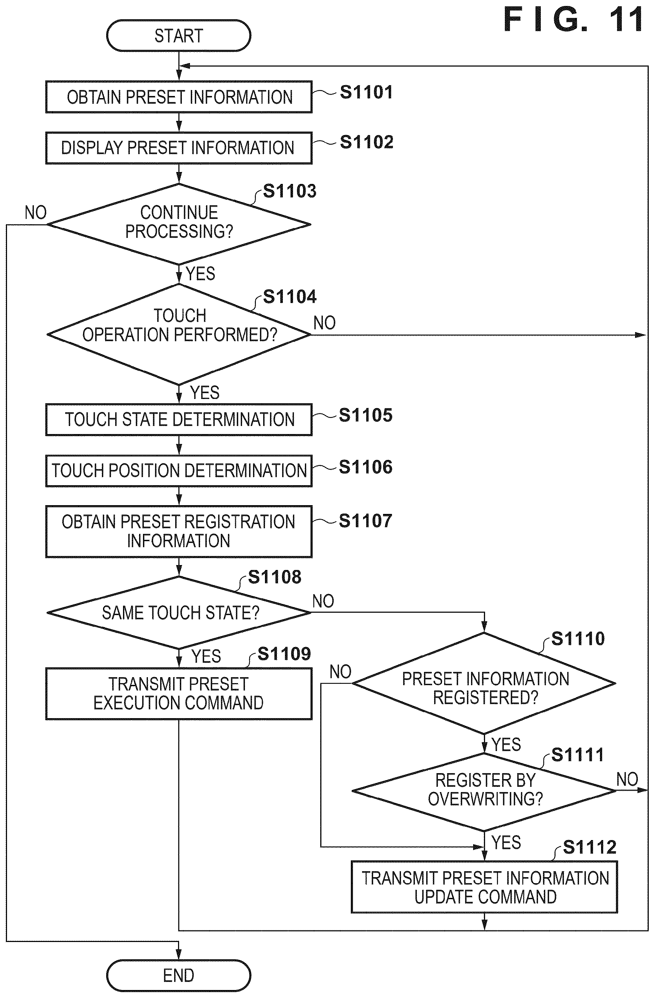

This processing executed by the control apparatus 200 will be described in detail below with reference to the flowchart of FIG. 11. The processing illustrated in FIG. 11 is implemented by the CPU 201 reading out a program stored in the ROM 203 and loading the program into the RAM 202 and executing the control and computational processing of each unit. Also, the flowchart of FIG. 11 is executed based on information (operation information) indicating the content of the user input obtained by the CPU 201 via the operation I/F 206. Also, the processing illustrated in FIG. 11 is an example, and the order of the processing is not limited.

In S1101 to S1109, processing similar to that of S301 to S309 of FIG. 3, respectively, is executed.

In S1110, the CPU 201 determines whether or not an image capture condition (preset information) is associated (registered) with a button. In a case where it is determined to be registered, the processing advances to S1111. Otherwise, the processing advances to S1112. Here, the CPU 201 reads out the preset information stored in S1107 from the RAM 202 and, in a case where information other than the preset number includes at least one piece of information, determines that preset information is registered to the button.

In S1111, the CPU 201 executes a confirmation notification for whether or not to update the image capture condition and determines whether or not to update the image capture condition based on a user input. In the case of updating the image capture condition, the processing advances to S1112. Otherwise, the processing returns to S1101. Here, the CPU 201 displays on the display unit 207 a notification screen for notifying that the existing information needs to be overwritten to register the preset information and a select button for the user to select whether or not to overwrite. Next, in a case where the user operates the select button via the operation I/F 206 and overwrite is set, the CPU 201 advances the processing to S1112. In a case where do not overwrite is set, the CPU 201 returns the processing to S1101. In S1112, processing similar to that of S310 of FIG. 3 is executed.

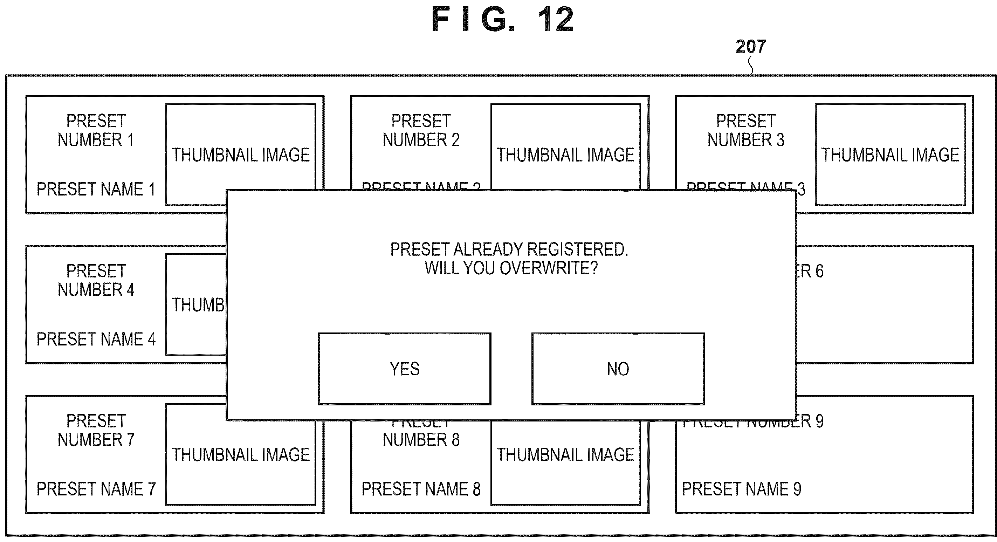

FIG. 12 is a diagram illustrating an example of the notification screen and the select button displayed on the display unit 207 by the CPU 201. In FIG. 12, a confirmation notification including text saying "A preset is already registered. Overwrite?" and buttons for inputting "Yes/No" in response are displayed on the display unit 207. When the "Yes" button illustrated in FIG. 12 is pressed by the user, the CPU 201 determines that overwrite has been set and advances the processing to S1112. When the "No" button is pressed by the user, the CPU 201 determines that do not overwrite has been set and returns the processing to S1101. Note that it is sufficient that the notification screen illustrated in FIG. 12 communicates to the user that the preset information will be overwritten, and it is sufficient that the content displayed on the select button allows the user to select the processing for the overwriting setting.

According to such processing, even in a case where preset information is already registered at the time of preset registration, unintended overwriting of preset information by the user can be prevented from occurring.

### Fourth Embodiment

A control apparatus according to the fourth embodiment, in addition to executing the processing described as being executed in the first embodiment, determines whether a user input on a button is on a first region of the button. Next, in a case where the user input is on the first region of the button, the control apparatus executes normal preset registration processing, and in a case where the user input is on a second region that is not the first region, the control apparatus performs registration of preset information other than a thumbnail image. In the example described here, a thumbnail region is used as the first region and the region other than the thumbnail region in the button is used as the second region. However, these regions may be set in any manner. The camera 100 and the control apparatus 200 according to the present embodiment have a similar configuration to that of the first embodiment and can execute similar processing. Thus, redundant descriptions will be omitted.

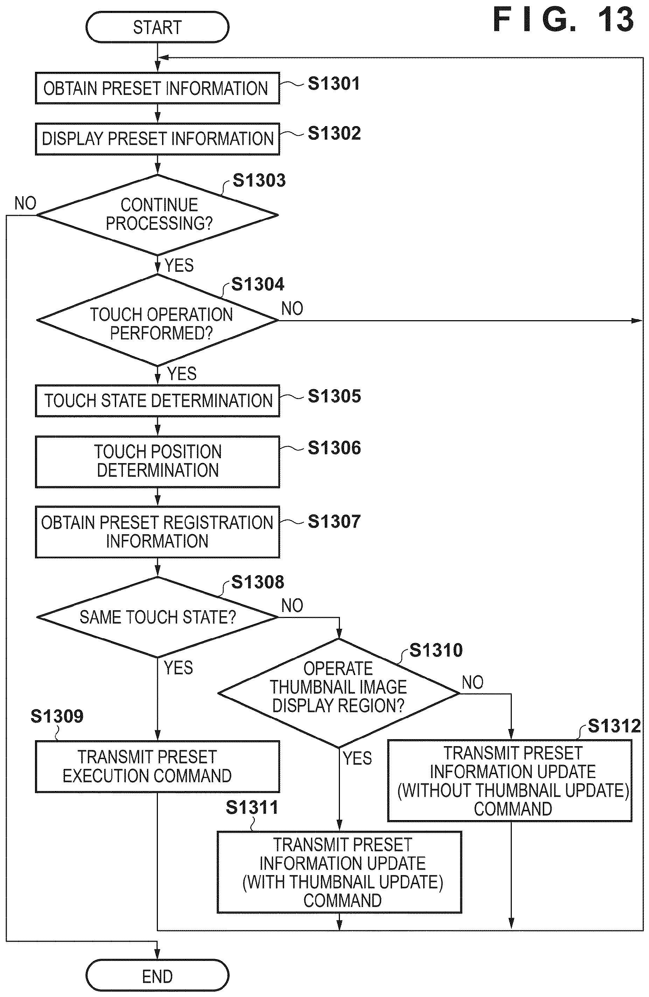

This processing executed by the control apparatus 200 will be described in detail below with reference to the flowchart of FIG. 13. The processing illustrated in FIG. 13 is implemented by the CPU 201 reading out a program stored in the ROM 203 and loading the program into the RAM 202 and executing the control and computational processing of each unit. Also, the flowchart of FIG. 13 is executed based on information (operation information) indicating the content of the user input obtained by the CPU 201 via the operation I/F 206. Also, the processing illustrated in FIG. 13 is an example, and the order of the processing is not limited.

In S1301, processing similar to that of S301 of FIG. 3 is executed. In S1302, the CPU 201 reads out the preset information stored in the RAM 202 and the GUI button information stored in the RAM 202 in advance from the RAM 202. Next, the CPU 201, based on the preset number read out from the RAM 202, associates the preset information with the GUI button and stores this in the RAM 202 and also displays a GUI based on this information on the display unit 207. Here, the CPU 201 functions as a button display unit (a receiving unit that obtains an operation of a button) that displays a button with an allocated image capture condition obtained via the image capture condition obtaining unit. Note that in the present embodiment, the GUI button information read out from the RAM 202 indicates the center coordinates and the vertical and horizontal length of each GUI button on the display unit 207. However, the GUI button information is not limited thereto. For example, as the GUI button information, information that can determine the position and area of the GUI button on the display unit 207, such as the center coordinates of each GUI button on the display unit 207, the vertical and horizontal length of each GUI button, the center coordinates of a region displaying a thumbnail image, the vertical and horizontal length of a region displaying a thumbnail image, and the like can be discretionarily used. It is sufficient that the GUI button information used here is information, such as the four corner coordinates of each GUI button and the four corner coordinates of the thumbnail image display region, that allows the position and region of the GUI buttons and the thumbnail image display region on the display unit 207 to be comprehended. Also, the GUI button information may not be stored in the RAM 202 in advance and may be obtained from the camera 100 or set by the user.

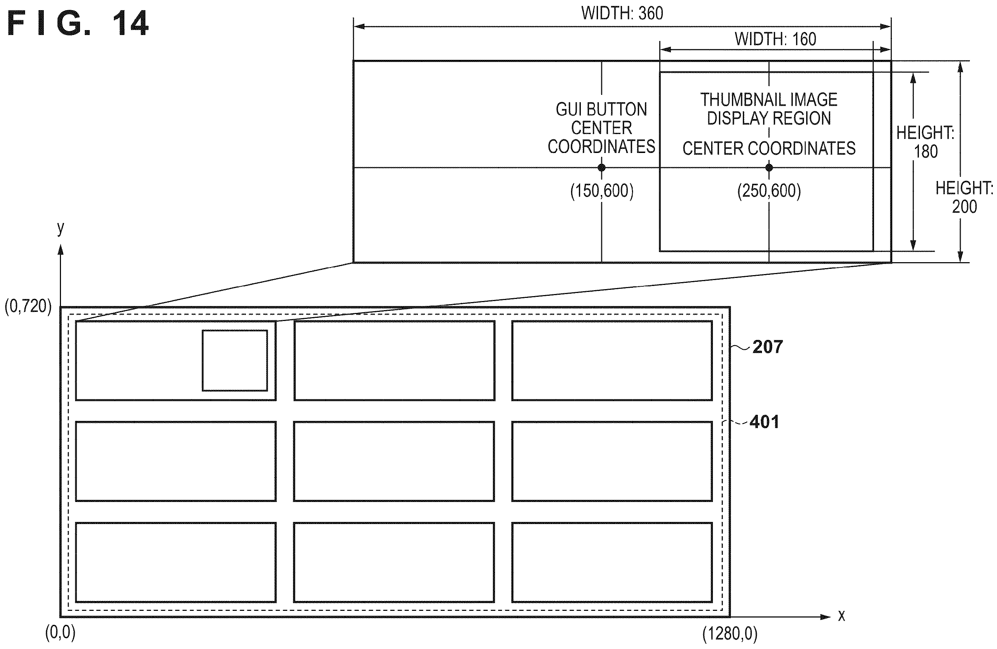

FIG. 14 illustrates an example of a GUI button arrangement when the GUI buttons are displayed as a list on the display unit 207 based on the GUI button information according to the present embodiment. In the example of FIG. 14, the GUI buttons 401 are displayed in order of the preset number from the upper left of the display unit 207, and when they cannot all be displayed in a row, a line break is used. In the example illustrated in FIG. 14, a total of nine GUI buttons are displayed in three rows and three columns on one screen. However, the number of GUI buttons displayed on one screen is not limited thereto. Also, the number of GUI buttons displayed on one screen in this manner may be set in advance or may be settable by the user. Also, in a case where there are many preset numbers and all do not fit on one screen, a display of a scrollbar, a page switch button, or the like may be performed, and a certain number of the GUI buttons for display may be displayed at a time while switching between them.

In S1303 to S1309, processing similar to that of S303 to S309 of FIG. 3, respectively, is executed.

In S1310, the CPU 201 reads out the GUI button information stored in S1302 and the touch position stored in S1306 from the RAM 202. Next, the CPU 201 determines whether or not the touch position is in the thumbnail image display region on the GUI button based on the read information. In a case where the touch position is in the thumbnail image display region on the GUI button, the processing advances to S1311. Otherwise, the processing advances to S1312. In S1311, processing similar to that of S310 of FIG. 3 is executed.

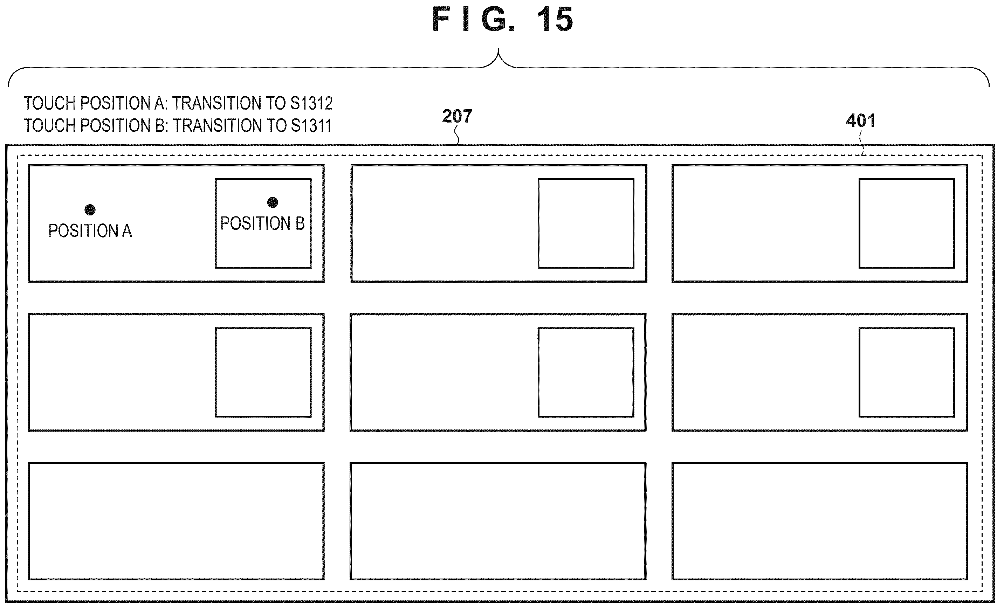

FIG. 15 is a diagram for describing a user touch input position on the display unit 207. A position A of FIG. 15 is in a region outside of a thumbnail region in the GUI button, and a position B is in the thumbnail region in the GUI button. In a case where a touch input is made at the position A, it is determined that the touch operation was in a region outside of the thumbnail image display region on the GUI button and the processing advances to S1312. In a case where a touch input is made at the position B, it is determined that the touch operation was in the thumbnail image display region on the GUI button and the processing advances to S1311.

In S1312, the CPU 201 reads out the preset information stored in S1307 from the RAM 202. Next, the CPU 201 transmits a control command for associating (registering or updating) information other than a thumbnail image, from among the preset information stored under the preset number, to the camera 100 via the communication unit 204 and then returns the processing to S1301.

According to such processing, the thumbnail image registration setting can be changed in accordance with a user touch operation position without a separate settings screen being provided.

Note that in the example described above, processing to change whether to update a thumbnail in preset information registration is executed in accordance with an operation position (position of an operation on a button). However, as long as the content of the processing using a preset is changed in accordance with an operation position, the content that is changed is not particularly limited to this. For example, the control apparatus 200 may control the execution and registration of a preset in accordance with an operation position in addition to controlling the change of whether to register a thumbnail image in accordance with an operation position. In such a case, for example, the control apparatus 200 may change the processing between four patterns including a case where a short press (the first characteristic) operation is made at an operation position on the thumbnail image (the first region), a case where a long press (the second characteristic) operation is made at an operation position on the thumbnail image (the first region), a case where a short press (the first characteristic) operation is made at an operation position outside (the second region) of the thumbnail image, and a case where a long press (the second characteristic) operation is made at an operation position outside (the second region) of the thumbnail image. Examples of processing corresponding to these four patterns will be described below. For example, in a case where a short press (the first characteristic) operation is made at an operation position on the thumbnail image (the first region), the preset is executed without a user notification. In a case where a long press (the second characteristic) operation is made at an operation position on the thumbnail image (the first region), a preset is registered or overwritten and stored together with the thumbnail image. In a case where a short press (the first characteristic) operation is made at an operation position outside (the second region) of the thumbnail image, a notification to execute image capture using the image capture condition associated with the button or to overwrite the registration is performed. In a case where a long press (the second characteristic) operation is made at an operation position outside (the second region) of the thumbnail image, a preset is registered or overwritten and stored.

The disclosure of the present specification includes the following control apparatus, control method, and program.

### Other Embodiments

### (Item 1)

A control apparatus comprising:
first obtaining means for obtaining a touch input of a user on a button on an operation screen that receives an operation for an image capture apparatus;
first determination means for determining whether a characteristic of the touch input is a first characteristic or a second characteristic different from the first characteristic;
control means for, in a case where the characteristic of the touch input is the first characteristic, causing the image capture apparatus to execute image capture using an image capture condition associated with the button, and, in a case where the characteristic of the touch input is the second characteristic, executing processing to associate an image capture condition of the image capture apparatus with the button.

### (Item 2)

The control apparatus according to item 1, wherein
the first determination means determines, based on a duration of the touch input, whether the characteristic of the touch input is the first characteristic or the second characteristic.

### (Item 3)

The control apparatus according to item 2, wherein
the first determination means determines that the characteristic of the touch input is the first characteristic in a case where the touch input is interrupted within a first threshold time from detection of the touch input, and determines that the characteristic of the touch input is the second characteristic in a case where a continued duration of the touch input from detection of the touch input is longer than the first threshold time.

### (Item 4)

The control apparatus according to item 1, wherein
the first determination means determines that the characteristic of the touch input is the second characteristic in a case where a second touch input is performed within a second threshold time from when the touch input is interrupted, and otherwise determines that the characteristic of the touch input is the first characteristic.

### (Item 5)

The control apparatus according to any of items 1 to 4, further comprising second obtaining means for obtaining an image captured by the image capture apparatus, wherein
in a case where the characteristic of the touch input is the second characteristic, the control means associates the image as a thumbnail image with the button in addition to the image capture condition of the image capture apparatus.

### (Item 6)

The control apparatus according to any of items 1 to 5, wherein
the first determination means determines whether the characteristic of the touch input is a third characteristic different from the first characteristic and the second characteristic, and
in a case where the characteristic of the touch input is the third characteristic, the control means executes processing to associate a thumbnail image with the button in addition to the image capture condition of the image capture apparatus.

### (Item 7)

The control apparatus according to any of items 1 to 6, further comprising second determination means for determining whether to associate a thumbnail image with the button, wherein
in a case where the characteristic of the touch input is the second characteristic and in a case where it is determined not to associate the thumbnail image with the button, the control means executes processing to associate the image capture condition of the image capture apparatus with the button, and
in a case where the characteristic of the touch input is the second characteristic and in a case where it is determined to associate the thumbnail image with the button, the control means executes processing to associate the thumbnail image with the button in addition to the image capture condition of the image capture apparatus.

### (Item 8)

The control apparatus according to any of items 1 to 7, further comprising notification means for, in a case where the image capture condition is associated with the button and the characteristic of the touch input is the second characteristic, issuing a confirmation notification regarding whether to update the image capture condition, wherein
in a case where a user input for updating the image capture condition is obtained, the control means executes processing to associate the image capture condition of the image capture apparatus with the button.

### (Item 9)

The control apparatus according to any of items 1 to 8, further comprising
third obtaining means for obtaining a touch position that is a position of the touch input on the button; and
third determination means for determining whether the touch position is in a first region on the button or in a second region different from the first region on the button, wherein
in a case where the characteristic of the touch input is the second characteristic and in a case where the touch position is in the first region, the control means executes processing to associate the image capture condition of the image capture apparatus with the button, and
in a case where the characteristic of the touch input is the second characteristic and in a case where the touch position is in the second region, the control means executes processing to associate a thumbnail image with the button in addition to the image capture condition of the image capture apparatus.

### (Item 10)

The control apparatus according to item 9, wherein
the first region is a display region of the thumbnail image on the button, and the second region is a region outside of the display region of the thumbnail image on the button.

### (Item 11)

The control apparatus according to any of items 1 to 10, wherein
in a case where the characteristic of the touch input is the second characteristic, the control means associates a current image capture condition of the image capture apparatus with the button.

### (Item 12)

A control method comprising:
obtaining a touch input of a user on a button on an operation screen that receives an operation for an image capture apparatus;
determining whether a characteristic of the touch input is a first characteristic or a second characteristic different from the first characteristic;
in a case where the characteristic of the touch input is the first characteristic, causing the image capture apparatus to execute image capture using an image capture condition associated with the button, and
in a case where the characteristic of the touch input is the second characteristic, executing processing to associate an image capture condition of the image capture apparatus with the button.

### (Item 13)

A computer program which, when the program is executed by a computer, causes the computer to carry out the method of item 12.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A control apparatus (200) comprising:
a control means (201) configured to output an instruction regarding an image capture condition to an image capture apparatus (100);
a display means (207) configured to display an operation screen including at least one button (401) for each image capture condition; and
a receiving means (206) for obtaining an operation having a first characteristic or an operation having a second characteristic different from the first characteristic performed on the button, wherein
the control means (201) is configured to, in a case where the operation performed on one button has the first characteristic output an instruction to cause the image capture apparatus to execute image capture using an image capture condition associated with the one button, and
in a case where the operation performed on the one button has the second characteristic, execute processing to associate an image capture condition of the image capture apparatus with the one button.

2. The control apparatus according to claim 1, wherein
the control means (201) is configured to determine, whether the operation has the first characteristic or the second characteristic based on a duration of the operation.

3. The control apparatus according to claim 2, wherein
the control means (201) is configured to determine that the operation has the first characteristic in a case where the operation is interrupted within a first threshold time from detection of the operation, and determine that the operation has the second characteristic in a case where a continued duration of the operation from detection of the operation is longer than the first threshold time.

4. The control apparatus according to claim 1, wherein
the control means (201) is configured to determine that the operation has the second characteristic in a case where a second operation is performed within a second threshold time from when the operation is interrupted, and otherwise determine that the operation has the first characteristic.

5. The control apparatus according to any one of claims 1 to 4, further comprising:
a first obtaining means (204) configured to obtain an image captured by the image capture apparatus, wherein
the control means (201) is further configured to, in a case where the operation has the second characteristic, associate the image as a thumbnail image with the one button in addition to the image capture condition of the image capture apparatus.

6. The control apparatus according to any one of claims 1 to 5, wherein
the control means (201) is configured to further determine whether the operation has a third characteristic different from the first characteristic and the second characteristic, and
in a case where the operation has the third characteristic, execute processing to associate a thumbnail image with the one button in addition to the image capture condition of the image capture apparatus.

7. The control apparatus according to any one of claims 1 to 6, wherein:
the control means (201) is configured to determine whether to associate a thumbnail image with the one button, wherein
in a case where the operation has the second characteristic and in a case where it is determined not to associate the thumbnail image with the one button, the control means executes processing to associate the image capture condition of the image capture apparatus with the one button, and
in a case where the operation has the second characteristic and in a case where it is determined to associate the thumbnail image with the one button, the control means executes processing to associate the thumbnail image with the one button in addition to the image capture condition of the image capture apparatus.

8. The control apparatus according to any one of claims 1 to 7, wherein:
the control means (201) is configured to issue, in a case where the image capture condition is associated with the one button and the operation has the second characteristic, a confirmation notification regarding whether to update the image capture condition, wherein
in a case where a user input for updating the image capture condition is obtained, the control means (201) executes processing to associate the image capture condition of the image capture apparatus with the one button.

9. The control apparatus according to any one of claims 1 to 8, wherein the control means (201) is further configured to:
obtain an operation position that is a position of the operation on the one button; and
determine whether the operation position is in a first region on the one button or in a second region different from the first region on the one button, wherein
in a case where the operation has the second characteristic and in a case where the operation position is in the first region, the control means executes processing to associate the image capture condition of the image capture apparatus with the one button, and
in a case where the operation has the second characteristic and in a case where the operation position is in the second region, the control means executes processing to associate a thumbnail image with the one button in addition to the image capture condition of the image capture apparatus.

10. The control apparatus according to any one of claims 1 to 8, wherein the control means (201) is further configured to:
obtain an operation position that is a position of the operation on the one button; and
determine whether the operation position is in a first region on the one button or in a second region different from the first region on the one button, wherein
in a case where the operation position is in the first region, the control means causes the image capture apparatus to execute image capture using an image capture condition associated with the one button, and
in a case where the operation position is in the second region, the control means executes processing to associate an image capture condition of the image capture apparatus with the one button.

11. The control apparatus according to claim 9 or 10, wherein
the first region is a display region of the thumbnail image on the one button, and the second region is a region outside of the display region of the thumbnail image on the one button.

12. The control apparatus according to any one of claims 1 to 11, wherein
the control means (201) is configured to. in a case where the operation has the second characteristic, associate a current image capture condition of the image capture apparatus with the one button.

13. The control apparatus according to any one of claims 1 to 12, wherein
the control means (201) is configured to determine whether the operation has the first characteristic or the second characteristic based on a total number of fingers used to perform input.

14. A control method comprising:
outputting an instruction regarding an image capture condition to an image capture apparatus (100);
displaying an operation screen including at least one button for each image capture condition; and
obtaining an operation having a first characteristic or an operation having a second characteristic different from the first characteristic performed on the button, wherein
in a case where the operation performed on one button has the first characteristic, the image capture apparatus is caused to execute image capture using an image capture condition associated with the one button, and
in a case where the operation performed on the one button has the second characteristic, processing to associate an image capture condition of the image capture apparatus with the one button is executed.

15. A computer program comprising instructions which, when the program is executed by a computer, causes the computer to carry out the method of claim 14.
